# EUROPEAN PATENT SPECIFICATION

(11) **EP 0 280 552 B1**
(45) Date of publication and mention of the grant of the patent: **21.04.1993**
(21) Application number: 88301634.7
(22) Date of filing: 25.02.1988
(51) Int. Cl.: G21C 13/06, G21C 13/02

(54) **Arrangement for plugging poorly accessible flow holes having a chamfer**
Anordnung zum Verschliessen schwerzugänglicher Strömungsöffnungen mit einer Abschrägung
Installation pour boucher des orifices de circulation peu accessibles ayant un chanfrein

(30) Priority: 27.02.1987 US 19759
(43) Date of publication of application: 31.08.1988
(73) Proprietor: WESTINGHOUSE ELECTRIC CORPORATION, Pittsburgh Pennsylvania 15222 (US)
(72) Inventor: Popalis, Craig Hamilton, Pensacola, FL 32503 (US); Hahn, Joseph James, Pittsburgh, PA 15227 (US)
(74) Representative: van Berlyn, Ronald Gilbert

(56) References cited:
- EP-A- 0 058 850
- FR-A- 2 541 032
- FR-A- 2 550 877
- US-A- 4 548 783
- US-A- 4 652 418

## Description

This invention relates generally to an arrangement for plugging poorly accessible holes having a chamfer and, more particularly, to an arrangement for plugging flow holes in core barrels of nuclear reactors.

As well known in the art, a pressurized-water reactor typically includes a pressure vessel and, disposed therein, a reactor core comprising an array of nuclear fuel assemblies, vertical baffle plates positioned perimetrically about the array of fuel assemblies and joined together, a core barrel surrounding the reactor core in spaced relationship with respect to the baffle plates, and horizontal former plates interposed between the core barrel and the baffle plates in vertically spaced relationship with one another. Reactor coolant circulated through the reactor enters the pressure vessel at an upper region thereof, by-passes the reactor core by flowing downward exteriorly thereof, then reverses its direction to flow upward through the core to receive heat generated therein, and exits the pressure vessel from an upper region thereof.

Some pressurized water reactors have core barrels originally provided with flow holes which extend through the barrel walls in the region between the two uppermost former plates. Thus, a portion of the coolant flowing downward after entering the pressure vessel will pass through the flow holes in the core-barrel wall and flow, in the space between the barrel and the vertical baffle plates, downward through flow holes provided for this purpose in all of the former plates, except the uppermost one. This particular arrangement was found to have a drawback insofar as it results in a considerable pressure differential across the baffle plates which, in turn, can cause coolant to be forced through gaps between adjoining baffle plates (which usually are not welded but bolted together) and to issue therefrom in the form of high-pressure jets impinging upon fuel rods near the core perimeter and causing them to vibrate. This, of course, is undesirable since vibrating fuel rods are likely to sustain damage and to damage the spacer grids supporting them.

U.S. patents Nos. 4,576,778 and 4,591,068, both assigned to the Westinghouse Electric Corporation, disclose ways and means for alleviating the above-mentioned "jetting" problem by changing the direction of coolant bypass flow in the space between the core barrel and the baffle plates from a downward flow to an upward flow, and thereby minimizing the pressure differential between that space and the interior of the core so that objectionable jetting of coolant through gaps between baffle plates will not occur. The change of flow direction is accomplished by plugging the flow holes in the wall of the core barrel so as to confine all coolant bypass flow in the downward direction to the space surrounding the core barrel, and by providing flow holes also in the uppermost former plate so as to place the space between the core barrel and the baffle plates in direct fluid flow communication with the region above the core as well as that below it.

The plugs heretofore employed for plugging flow holes in the walls of core barrels are of a hydraulic type comprising, broadly speaking, a tubular plug body having a radially expandable portion which is insertable into a given flow hole to be plugged, a tapered mandrel slideably supported piston-like within the tubular plug body, and a nipple for pressurizing the latter, from a suitable source of pressurizing liquid, in a manner causing the mandrel to be forced deeper into the plug body and thereby to press the radially expandable plug-body portion firmly against the inner peripheral surface flow hole.

This kind of plug will perform well if used in connection with a flow hole having the particular shape and dimensions for which the plug was designed. However, not all existing core barrels have identical flow holes. For instance, some flow holes may have entrance portions (having regard to the direction of plug insertion) with a relatively short or shallow chamfer leading to a cylindrical or non-chamfered part of the hole, whilst others may have entrance portions with a longer or deeper chamfer and possibly with a wider mouth. Thus, a conventional plug designed for use in a flow hole with a shallow chamfer at its entrance may not lend itself to being effectively utilized in a flow hole having a deep chamfer and, consequently, requiring a longer plug, i.e. one long enough to have its radially expandable portion properly positioned within the non-chamfered portion of the flow hole. The obvious solution to this would be to provide plugs of various lengths, and to use for each flow hole to be plugged a plug having the desired length. However, there is a definite limit to the length which a plug to be used for plugging a flow hole in a reactor core barrel can have, a limit imposed by the relatively narrow space between the core barrel and the thermal neutron shield typically surrounding it, and through which space it is necessary to introduce and install the plug.

A further limitation of hydraulically operable plugs lies in that they are not well suitable for use in plugging flow holes of small diameters, due to the fact that the hydraulic force or pressure required to achieve proper expansion of the plug body into firm frictional engagement with the wall surface of a flow hole varies inversely with the end-surface area of the mandrel, i.e. it varies inversely with the diameter of the plug. Hence, a plug having a diameter small enough to fit into a small flow hole would require a very high operating pressure which could subject it to unacceptably high stresses.

It is the principal object of the invention to provide an improved plug alleviating these problems, and the invention accordingly resides in a plug for plugging a flow hole extending through a wall and having a chamfered portion which leads into the wall from one side thereof, and a non-chamfered portion which leads from the chamfered portion to the opposite side of the wall, said plug comprising a plug body which has a proximal end and a distal end and is insertable, distal end first, into the flow hole from said one side of the wall, and said plug body comprising a tubular shell having a radially expandable distal end portion, and a tapered mandrel disposed within the shell and slideable therein so as to radially expand said distal end portion upon movement of the mandrel to an effective position thereof adjacent the distal end of the plug body, characterized by a retaining ring for limiting the extent to which said plug body is insertable into the flow hole, said retaining ring being sufficiently larger in diameter than the mouth to the chamfered portion of the flow hole to present an annular bearing surface for engagement with a surface portion of said wall, and being mounted on a proximal end portion of said shell for sliding movement thereon in a manner and within limits enabling the plug to be telescopically shortened to a minimum length facilitating installation thereof into the flow hole, and telescopically extended to a maximum length assuring proper positioning of said distal end portion for radial expansion thereof within the non-chamfered portion of the flow hole when the plug is fully inserted therein.

Preferably, the retaining ring defines an opening terminating in an annular ledge, and said proximal end portion of the shell has thereon a radial flange which is movably disposed within said opening and extend over the annular ledge, the latter and said radial flange cooperating to limit the extent of said telescopic extension. The retaining ring preferably has formed thereon detents which project laterally into said opening from peripheral wall portions thereof and cooperate with said radial flange so as to limit the extent of telescopic contraction of the plug. The retaining ring is exchangeable for another retaining ring of substantially like construction but permitting telescopic extension of the plug to a different maximum length.

The plug body preferably includes locking means for arresting and locking the mandrel in said effective position thereof when moved thereto; and preferably it includes also indicating means effective, when the mandrel reaches its effective position, to provide an indication to the effect that the distal end portion of the shell has been expanded. The distal end portion of the shell of the plug body preferably has formed thereon at least one sealing rib for sealingly engaging the inner wall surface of said non-chamfered portion of the flow hole, and preferably includes at least one gripping ring which protrudes from its peripheral surface thereof and is adapted to interlockingly indent the inner wall surface of said non-chamfered portion of the flow hole, both when the distal end portion is expanded within the non-chamfered portion of the hole.

The invention, from another aspect thereof, resides in a tool for installing the improved plug defined above in a flow hole extending through said wall, and wherein the latter has said one side thereof disposed opposite another wall in relatively closely spaced relationship therewith, characterized by (a) a frame having a front-to-rear dimension enabling it to be lowered into the space between the two walls so that the rear and front of the frame are facing respectively the other wall and the wall having the flow hole to be plugged; (b) a cradle assembly including means engageable with peripheral portions of the retaining ring of the plug so as to hold the latter in an installing disposition, said cradle assembly being supported in said frame for movement of the cradle assembly between a retracted position substantially within the confines of the frame, and a plug insertion position projected forward from the frame; and (c) a hydraulic ram supported in said frame for movement of the ram between an upper position above the cradle assembly, and a lower position behind the cradle assembly when in said plug insertion position thereof, said hydraulic ram including means cooperable with the cradle assembly to effect movement thereof to its plug insertion position upon movement of the ram from its upper to its lower position, means for reacting against said other wall, and a ram piston arranged to be axially aligned with the mandrel of the plug when held by the cradle assembly in said installing disposition and when the ram is in the lower position thereof, said ram piston having hydraulically operable to drive said mandrel to its effective position and thereby radially expand the plug. Preferably, said means for reacting against said other wall is an additional hydraulically operable piston adapted to be actuated simultaneously with said ram piston, and the ram piston includes an air-valve stem operable to release fluid bubbles and adapted to be operated by the indicator pin of the inserted plug when the indicator pin moves to the indicating position thereof.

A preferred embodiment of the invention will now be described, by way of example only, with reference to the accompanying drawings, in which:-
Figure 1 is a perspective partial view of a reactor core with downwardly directed coolant bypass flow between the reactor core and the core barrel;
Fig. 2 is a similar view showing the core-bypass coolant flow path modified to provide for an upwardly directed bypass flow between the reactor core and the core barrel;
Fig. 3 is an enlarged cross-sectional partial view of the core barrel with a flow hole therethrough, and of a thermal neutron shield surrounding the core barrel;
Fig. 4A is cross-sectional side view, partly in section, of a plug embodying the invention;
Fig. 4B is a plan view of the plug as seen from the top, with respect to Fig. 4A;
FIg. 4C is a partial cross-sectional side view showing the plug installed in a core-barrel flow hole having a deep chamfer;
Fig. 5 is a view similar to Fig. 4C but showing the plug installed in a core-barrel flow hole having a shallow chamfer;
Fig. 6A is a front view of a tool for installing the plug embodying the invention;
Fig. 6B is a top view of the tool;
Fig. 7A is a side elevational view of the tool, with a portion thereof shown broken away for clarity; and
Fig. 7B is a side elevational view of the tool as taken from another side thereof.

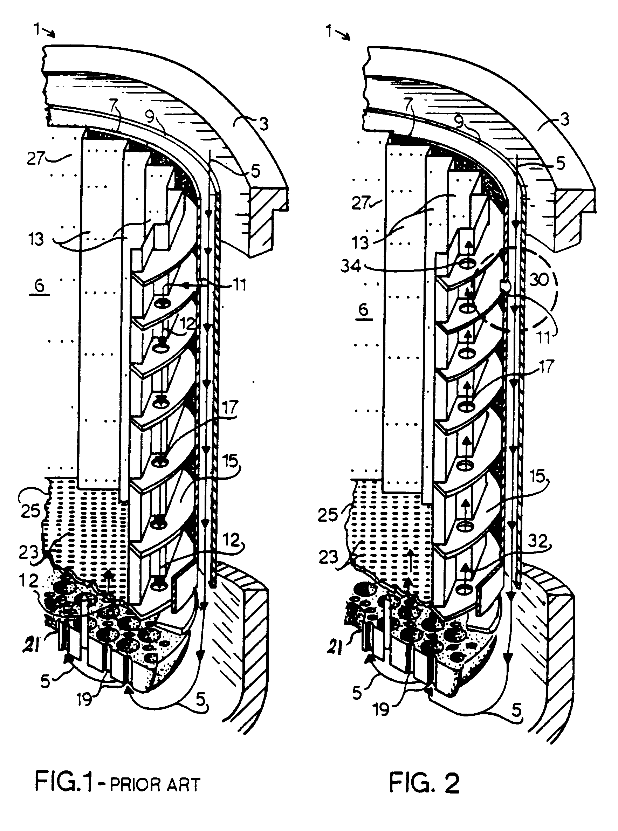

Referring initially to Figs. 1 and 2 wherein like reference numerals denote like parts, the structure partially illustrated therein comprises a reactor core generally indicated at 1 and including a lower core plate 25 having flow apertures 23 formed therein, a reactor or pressure vessel generally indicated at 3, a lower core support plate 21 having coolant-flow passageways 19 extending therethrough, and a core barrel 7 surrounded by a thermal neutron shield 9 and itself surrounding a space 6 which normally is occupied by an array of nuclear fuel assemblies (not shown) forming the reactor core proper. Disposed about the array of fuel assemblies (not shown) are vertical baffle plates 13 defining the perimeter of the reactor core, which baffle plates 13 are joined, i.e. bolted together and have secured, e.g. bolted, thereto a plurality of horizontal former plates 15 disposed between the core barrel 7 and the baffle plates 13 in vertical spaced relationship with respect to one another. In Fig. 1, all of the former plates 15, except the one uppermost, are provided with flow holes 17 (only one per plate is shown), and the core barrel 7 is provided with flow holes 11 (only one is shown) extending through the barrel wall and providing fluid flow communication between the space on the outside of the core barrel 7 and the space between the two uppermost former plates 15 on the inside thereof. With this arrangement, some of the reactor coolant entering the pressure vessel 3 will flow downward in the space exterior to the core barrel 7, as indicated by arrows 5, and some of it will pass through the flow holes 11 in the core barrel and flow, through the holes 17 in the former plates 15, downward in the space between the core barrel 7 and the baffle plates 13, as indicated by arrows 12, the two partial streams of coolant reversing their direction below the reactor core, merging, and flowing upwards through the fuel assemblies (not shown) within the core space 6. Typically, the coolant flowing along these paths is light water which is pressurized to about 153 atmospheres (2250 psi) so that a considerable pressure differential exists between the regions on the outside and on the inside the assembly of baffle plates 13. As explained initially herein, this high pressure differential will cause high-pressure jets of coolant to squirt through any gaps existing between adjoining baffle plates, and to impinge upon fuel rods near the perimeter of the reactor core.

Likewise as explained hereinbefore, in order to overcome this jetting problem, the arrangement shown in Fig. 1 was modified in the manner illustrated in Fig. 2, namely, by plugging the flow holes 11 in the wall of the core barrel 7, as at 30, and by providing also the uppermost former plate 15 with flow holes, as at 34. As a result, the bypass flow of coolant in the space between the core barrel 7 and the baffle plates 13 is in the upward direction, as indicated by arrows 32, and therefore the pressure differential across the baffle plates 13 is minimal.

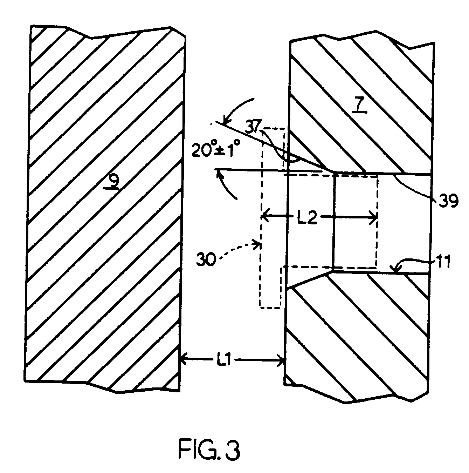

Referring to Fig. 3 which shows a wall portion of the core barrel 7 with one of the flow holes 11 extending therethrough, it is seen therefrom that the flow hole 11 has a chamfered portion 37 extending from the outer surface of the core barrel wall into the latter, and a cylindrical or non-chamfered portion 39 extending from the chamfered portion 37 to the inner surface of the barrel wall. The core barrel 7, hence the mouth of the chamfered flow-hole portion 37, is spaced from the thermal shield 9 a distance L1 which typically may be 3.40cm. Assuming a chamfered portion 37 having a length or depth (dimension in the axial direction of the flow hole 11) of about 1.50cm, a plug for sealing the flow hole 11, as indicated at 30 in Fig. 2, would have to have an overall length L2 of about 3.80cm in order to make proper sealing contact with the cylindrical wall portion 39 of the hole 11. Thus, the overall plug length L2 would exceed the spacing L1 between the thermal shield 9 and the core barrel 7, and a conventional plug 30 (i.e. one with a unitary plug body having a retaining flange formed integral therewith, such as disclosed in the above-mentioned U.S. patent specification No. 4,591,068, for example) having such overall length consequently could not be used.

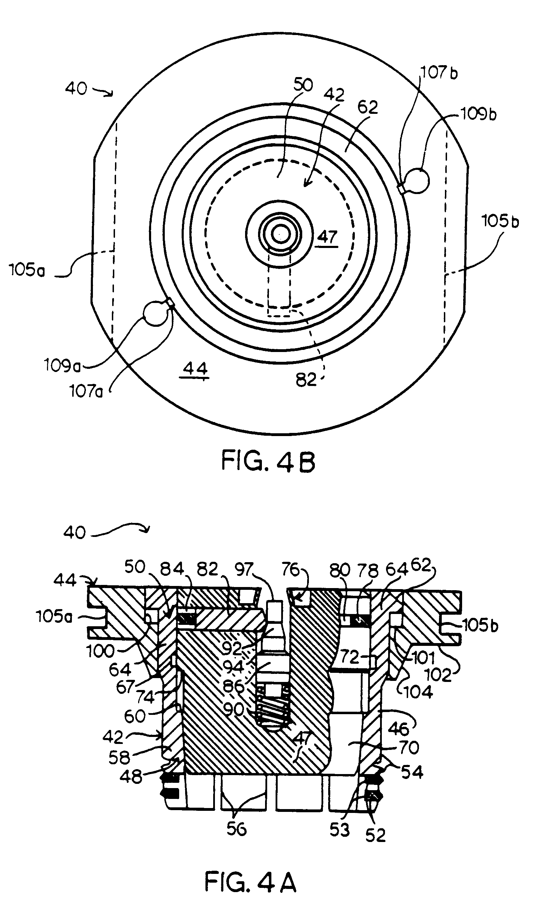

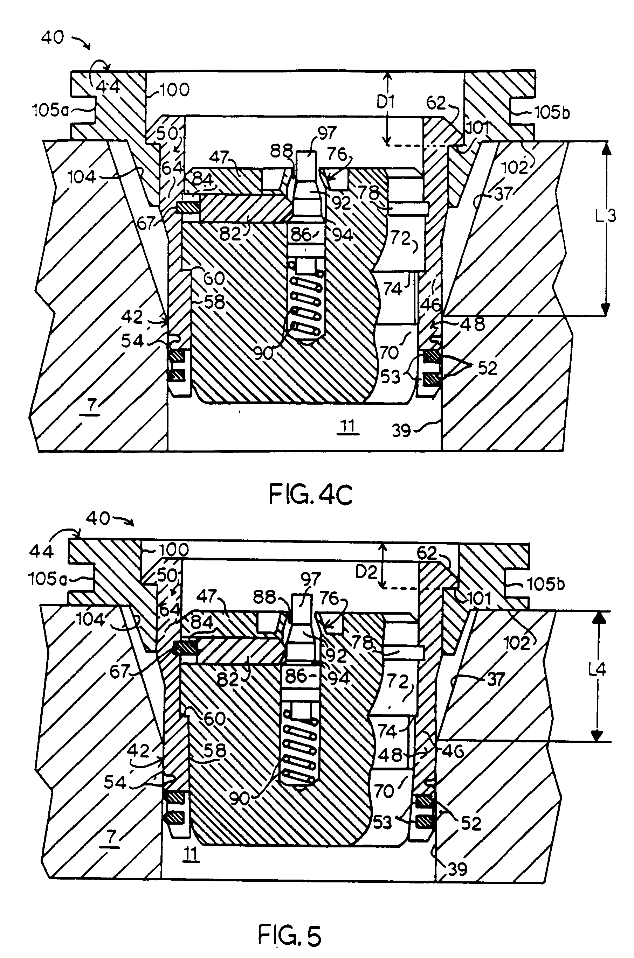

Referring now to Figs. 4A, 4B and 4C which illustrate a preferred embodiment of the invention, the plug shown therein and designated generally with reference numeral 40 includes a plug body 42 which is insertable into the flow hole 11 to be plugged and comprises a tubular shell or sleeve 46 and a mandrel 47 slideably disposed in the shell 46. The latter has a radially expandable distal end portion 48 including a section 58 having an inwardly tapered inner wall surface, and the mandrel 47 has a tapered distal end portion 70 cooperable with the inwardly tapered inner wall surface of the section 58 so as to force the distal end portion 48 of the shell 46 radially outward when the mandrel is driven from a home position, as shown in Fig. 4A, to an effective position, as shown in Fig. 4C. The plug 40 includes further a retaining ring 44 which is slideably mounted, in telescopic fashion, on a proximal end portion 50 of the shell 46 and adapted, upon insertion of the plug 40 into the flow hole 11, to seat against the outer surface of the core barrel 7 and to support the plug body 42 axially in the desired position thereof within the flow hole. The terms "proximal" and "distal" are employed herein in the sense of "nearer to" and "farther from" a given point located outside the core barrel and from which the plug is assumed to be viewed when installed in a flow hole.

The distal end portion 48 of the shell 46 has thereon a pair of gripping rings 52, made preferably of age-hardened stainless steel, which are seated in peripheral grooves 53 formed in the distal end portion, and which have tapered outer edges or rims protruding from the outer surface of the distal end portion 48 such that, when the plug 40 is installed in a flow hole 11 and the distal end portion 48 of its shell is radially expanded, the tapered rims of the gripping rings 52 will indent into the wall surface of the cylindrical portion 39 of the flow hole 11 and thereby assist in preventing dislodgement of the plug 40 from the hole 11 even under high coolant pressures such as occur during loss-of-coolant accident (LOCA) events. Adjacent the gripping rings 52, the distal end portion 48 has formed thereon two annular sealing ribs 54 adapted, upon radial expansion of the distal end portion 48 within the non-chamfered portion 39 of a flow hole 11, to be deformingly pressed against the wall of the cylindrical hole portion 39 so as, together therewith, to form a liquid seal. The distal end portion 48 has also a plurality of expansion-facilitating slots 56 extending axially into it from the distal end thereof. The tapered inner wall surface of section 58 of the distal end portion 48 of the shell 46 terminates, at its proximal end, in an annular shoulder 60 which cooperates with a similar shoulder 74 on the mandrel 47 to prevent movement of the mandrel beyond the effective position thereof (Fig. 4C) and, hence, prevent radial over-expansion of the distal end portion 48 of the shell 46. At its proximal end, the shell 46 has a radial flange 62 which cooperates with an annular ledge 101 in the opening 100 of the retaining ring 44 to limit of extent of telescopic extension of the plug 40.

The mandrel 47 has a cylindrical proximal end portion 72 which is axially slideable within the proximal end portion 50 of the shell 46 and, at its distal end, terminates in the annular shoulder 74 which cooperates with the interior shoulder 60 of the shell 46 to limit movement of the mandrel 47 in the direction toward the distal end of the plug.

In order to enable the mandrel 47 to be locked in its effective or shell-expanding position, the plug body 42 includes locking means 76 comprising a groove 67 which is formed in the inner wall surface of the shell 46 about midway between the shoulder 60 and the proximal end of the shell 46, and a C-shaped snap ring 78 which is seated within a peripheral groove 80 formed in the proximal end portion 72 of the mandrel 47 and adapted, upon arrival of the mandrel in its effective position, to snap into the groove 67 so as to lock the mandrel 47 against further axial movement thereof with respect to the shell 46, as shown in Fig. 4C.

The mandrel 47 includes means for indicating when it has reached its effective position (Fig. 4C) and thus has fully expanded the distal end portion 48 of the shell 46. The indicating means comprises an indicating pin or plunger 86, and a holding pin 82 cooperating therewith. The indicating plunger 86 is disposed in an axial bore 88 in the mandrel 47 from the proximal end thereof, and is axially slideable therein between a home or non-indicating position (Fig. 4A) and an indicating position (Fig. 4C) in which latter an indicator head 97 on the plunger 86 protrudes from the proximal end surface of the mandrel 47, thereby indicating that the mandrel is locked in its effective position. The indicating plunger is biased toward its indicating position by means of a pressure spring 90 interposed between the plunger 86 and the bottom of the axial bore 88. The holding pin 82 is axially slideable within a radial bore 84 formed in the proximal end portion 72 of the mandrel and extending radially from the peripheral groove 80 to the axial bore 88, the arrangement being such that the snap ring 78 seated in the groove 80 coacts with the outer end of the holding pin 82 to maintain the latter, at its bevelled inner end, engaged with the indicator pin 86. The indicator pin 86 has a tapered portion 92 disposed adjacent to and tapered toward the indicator head 97, a cylindrical portion extending from the base of the tapered portion 92, and an annular shoulder 94 adjacent to and facing toward the cylindrical portion. When the mandrel 47 is in its home position and the indicator pin 86 is depressed, as shown in Fig. 4A, the bevelled inner end of the indicator pin 86 cooperates with the tapered portion 92 of the indicator pin, and the snap ring 78, held resiliently compressed by the cylindrical inner wall of the proximal end portion 50 of the shell 46, urges the holding pin 82 against the indicator pin 86 with a force sufficient to hold the latter in its depressed position against the action of the operating spring 90. When subsequently the mandrel 47 is driven to its effective position (Fig. 4C), the snap ring 78, upon snapping into the groove 67, relieves its pressure against the holding pin 82 enough for the operating spring 90 to overcome the holding force and to cause the indicator pin 86 to "pop out", i.e. to move to its indicating position (Fig. 4C) in which it is stopped and held by its shoulder 94 engaging the inner end of the holding pin 82. In this position of the indicator pin 86, its indicator head 97 protrudes, as mentioned above, from the mandrel 47 to signalize that the plug has been installed and fully expanded in the flow hole 11 being plugged. The indicator head 97 may also be utilized to actuate an indicating element on the installation tool 110 to be described hereinlater.

The retaining ring 44 is sufficiently larger in diameter than the mouth to the chamfered portion 37 of the flow hole 11 to be plugged to present an annular bearing surface 102 for engagement thereof with the outer surface of the core barrel 7 when the plug 40 is fully inserted into the flow hole 11, and for thus supporting the plug body 42 axially in the desired position within the flow hole 11. The retaining ring 44 has an inner peripheral surface position defining the opening 100 which is diametrically enlarged, with respect to the remainder of the opening extending through the retaining ring, so as to form the annular ledge 101, and which has the radial flange 62 of the shell 46 axially movable therein, the opening 100 having a slightly larger diameter and a substantially greater axial dimension than the radial flange 62. The retaining ring 44 includes an annular axial extension 104 which has an inner diameter smaller than that of the opening 100 to slideably support the retaining ring 44 on a shell portion 64 which is located directly adjacent the radial flange 62, has the annular groove 67 interiorly formed therein, and has a somewhat larger outer diameter than the plug-body portion comprising the distal end portion 48 of the shell 46. The axial extension 104 has a tapered outer surface and diametral dimensions such as to enable it to be received within the chamfered portion 37 of a flow hole 11 in spaced relationship with the wall surface thereof, the extension 104 being tapered at an angle corresponding substantially to that of the chamfered portion 37 of the flow hole. The retaining ring 44 further has diametrically opposed handling, or tool-engageable, grooves 105a and 105b formed in the outer periphery thereof. Preferably, it also includes means for preventing it from sliding off the plug body 42 over the distal end thereof; in the embodiment described, and as seen from Fig. 4B, these means comprise detents 107a and 107b formed by drilling shallow bores 109a and 109b into the proximal ring face closely adjacent the opening 100, and deforming the metal portions remaining between the respective bores and the opening 100 inwards of the latter far enough to preclude movement thereof past the radial flange 62.

Referring in particular to Fig. 4C, the plug 40 is shown therein as utilized for plugging a flow hole 11 with a chamfered portion 37 having a depth L3. In order to enable proper gripping and sealing engagement of the expandable distal end portion 48 of the shell 46 with the cylindrical portion 39 of the flow hole, the coaxial opening 100 of the retaining ring 44 is of considerable depth D1 allowing the plug body 42 to extend into the flow hole 11 the required distance.

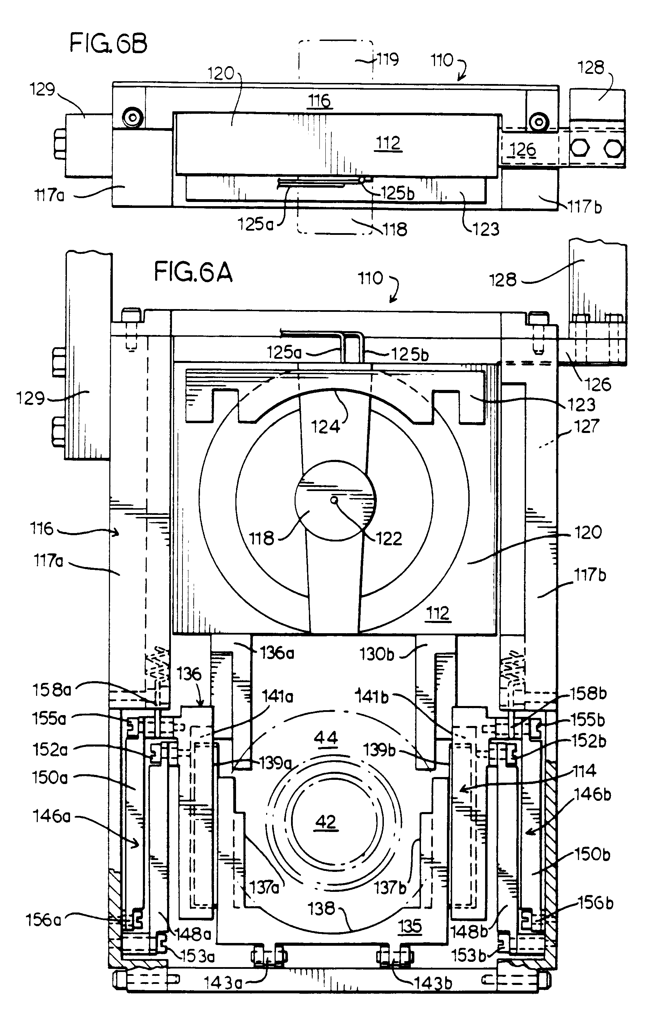

In Fig. 5, the same plug 40, but with a slightly modified retaining ring 44, is shown installed in a flow hole 11 with a chamfered portion 37 having a depth L4 which is less than the depth L3 in Fig. 4C. Into this flow hole 11 with the shallower chamfered portion 37, the plug 40 need extend only a lesser distance in order to achieve proper plugging and sealing engagement with the wall surface of the cylindrical portion 39, and therefore the retaining ring 44 has an opening 100 with a depth D2 < D1.

It will be appreciated from the above that the plug 40 embodying the invention can be readily adapted for use with chamfered flow-hole portion of different depths without altering the overall length of the plug body 42 and simply by using a retaining ring 44 with an opening 100 having the required depth. Moreover, the retaining ring 44 can be telescopically depressed on the plug body 42 to shorten the overall length of the plug 40 to correspond to that of the plug body 42, which greatly facilitates manipulation of the plug 40 during installation thereof through the limited space existing between the core barrel 7 and the thermal shield 9.

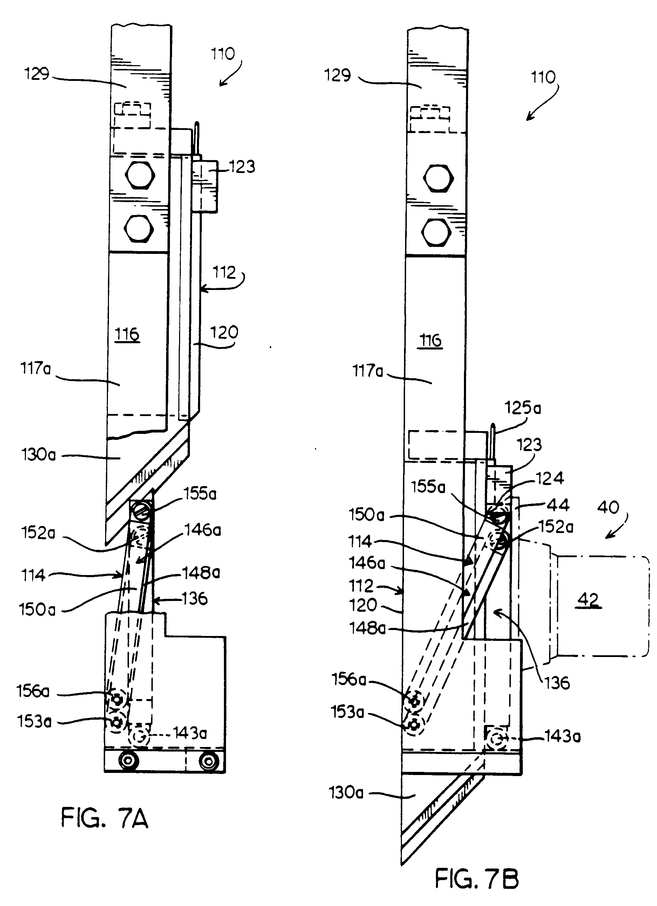

Referring now to Figs. 6 and 7 which illustrate an installation tool adapted for use with plugs constructed in accordance with the invention, the tool, generally designated with numeral 110, comprises a compact hydraulic ram 112 for driving the mandrel 47 of the plug 40 to its effective position within the shell 46, and a cradle assembly 114 for holding the plug 40 in installing disposition during insertion and expansion thereof. Both the hydraulic ram 112 and the cradle assembly 114 are movably supported in a generally rectangular frame 116 including a pair of substantially parallel spaced side members 117a and 117b. The hydraulic ram 112 is reciprocably movable along the side members 117a, 117b, and the cradle assembly 114 is pivotally supported for forward movement thereof out of the confines of the frame 116 (see Figs. 7A and 7B).

The hydraulic ram 112 comprises a square ram body 120 having a front piston 118 and a rear piston 119 (see Fig. 6B) telescopically interfit therein. Disposed centrally in the face of the front piston 118 is a spring-loaded air valve stem 122 adapted to be actuated by the indicator head 97 of the indicator pin 86 of the plug 40 to release a stream of bubbles of compressed air, when the indicator pin 86 pops out, as an indication to the effect that the plug 40 is securely in place.

Near its top, the ram 112 includes a retaining bar 123 having an arcuate lower edge 124 which is complementary in shape to the outer periphery of the retaining ring 44 of the plug 40. Just above the retaining bar 123 there are fluid lines 125a, 125b for conducting compressed air to the valve stem 122 and pressurized fluid to the pistons 118 and 119. The ram 112 includes also a slide bar 126 which extends, through a guide slot 127 in the frame member 117b, from the top of the ram 112 to one side thereof and has a long handle 128 connected thereto, an additional long handle 129 being connected to the other frame member 117a. Thus, an operator can move the ram 112 up and down in the frame 116 by means of the handle 128 while using the handle 129 to stabilize the frame 116. The ram 112 has a pair of substantially parallel-spaced downward extensions 130a and 130b defining ramps which are inclined about 45° with respect to a plane parallel to the front face of the ram 112 and adapted, upon downward movement of the ram 112, to cooperate with the cradle assembly 114 in a manner such as to move the latter forward and out of the frame 116.

The cradle assembly 114 comprises an outer cradle 136 and an inner cradle 135 slideably engaged therewith. The inner cradle 135 is generally U-shaped in that it has substantially parallel spaced leg portions with inwardly directed flanges 137a, 137b which are engageable with the grooves 105a, 105b in the outer peripheral surface of the retaining ring 44 of the plug 40, and a lower bight portion with an arcuate upper edge 138 conformed to the outer periphery of the retaining ring 44. The leg portions of the inner cradle 135 have formed thereon also outwardly directed flanges 139a, 139b which are slideably engaged in guide slots 141a, 141b formed in opposite surface portions of the outer cradle 136. At the bottom of the bight portion of the inner cradle 135 there are rollers 143a, 143b providing rolling support for the inner cradle 135 upon a floor member of the frame 116.

The outer cradle 136 has its opposite sides pivotally connected to the frame 116 by means of parallelogram-type linkages 146a, 146b, respectively, each of which comprises an inner pivot arm 148a, 148b and an outer pivot arm 150a, 150b. As seen best from Figs. 7A and 7B, the pivot arms 148a, 148b and 150a, 150b are of substantially equal length and overlie one another. Each of the inner pivot arms 148a, 148b has an upper pivot joint 152a, 152b by means of which it is pivotally connected to the outer cradle 136, and a lower pivot joint 153a, 153b by means of which it is pivotally connected to the adjacent side member of the frame 116. Each of the outer pivot arms 150a, 150b is similarly connected to the outer cradle 136 and the frame 116 by means of upper and lower pivot joints 155a, 155b, respectively, albeit at points which are vertically displaced from the upper and lower pivot joints 152a, 152b and 153a, 153b of the inner pivot arms. Attached to the upper pivot joints 155a, 155b are springs 158a, 158b for restoring the cradle assembly 154 from its forward position shown in Fig. 7A to its normal or retracted position shown in Fig. 7B.

It will be appreciated that whilst the cradle assembly 114 has been described herein as supported by means of linkages of a parallelogram-type, equivalent movements of the cradle assembly can be obtained also in other ways. For instance, the vertically disposed arms of the linkages 146a, 146b could be replaced with horizontally arranged pivoting arms operatively connected between the cradle 136 and the frame 116 in a "carpenter-ruler"-like configuration. Additionally, guide rails could be mounted on the sides of the cradle 135 to ensure a smooth to-and-fro movement of the cradle assembly 114 in the frame 116. Such an arrangement would eliminate the need for separate inner and outer cradles 135 and 136, and would allow these parts to be consolidated into a single generally U-shaped cradle structure.

As mentioned hereinbefore, the plugging arrangement embodying the invention is particularly well suited for plugging core-barrel flow holes having a chamfered entrance portion and a cylindrical inner portion, even one of relatively small diameter in the order of, say, 3.2cm, for example. As a first step in performing a plugging operation utilizing the invention, a particular flow hole 11 of the core barrel is selected for plugging, and the maximum diameter and axial dimension of its chamfered portion 37 are remotely ascertained with the aid of a television monitor. The next step resides in choosing an appropriate retaining ring 44 for the plug to be used, i.e. a retaining ring 44 having large enough a bearing surface 102 to properly seat against the outer surface of the core barrel 7, and having an opening 100 with the right depth D1 or D2 for ensuring proper engagement of the expanded plug body portion 48 with the cylindrical wall of the non-chamfered flow hole portion 39.

Once a retaining ring 44 with the required dimensions has been selected, the plug body 42, including the mandrel 47, is slipped through the retaining ring 44 until the radial flange 62 of the shell 46 is disposed within the ring opening 100, whereupon the detents 107a, 107b (Fig. 4B) are formed by drilling the shallow bores 109a, 109b and bending the resultant thin metal parts inwards, as explained hereinbefore.

The plug 40 thus assembled is detachably mounted on the installation tool 110 by manually pulling the cradle assembly 114 toward the front of the frame 116, and sliding the diametrically opposed grooves 105a, 105b in the retaining ring 44 over the respective flanges 137a, 137b of the inner cradle 135. The cradle assembly 114 is then released to enable the restoring springs 158a, 158b to pull it, together with the plug 40 thereon, back into the frame 116 and beneath the compact hydraulic ram 112, as shown in Fig. 6A. After securing the long handles 128 and 129 to the slide bar 126 and the frame 116, respectively, and ensuring that the retaining ring 44 on the plug body 42 is fully depressed to minimize the overall length of the plug 40, as shown in Fig. 4A, the operator manually lowers the installation tool 110, together with the plug 40 detachably mounted thereon, into the space between the core barrel 7 and the thermal shield 9, then aligns the distal end of the plug 40 with the mouth of the chamfered portion 37 of the selected flow hole 11, and partially inserts the plug 40 into the hole. Then, while holding the frame 116 steady by means of the long handle 129, the operator used the long handle 128 to push the ram 112 downward, thereby causing its ramps 130a and 130b to cam the cradle assembly 114 forward and thus causing the plug 40 to be inserted into the flow hole 11 fully, i.e. such that the distal end portion 48 of the shell 46 42 is lodged in the non-chamfered portion 39 of the hole. When the downwardly moving ram 112 is about to bottom on the floor member of the frame 116, the arcuate lower edge 124 of the retaining bar 123 engages the retaining ring 44 of the plug and, in cooperation with the arcuate upper edge 138 of the inner cradle 135, holds it captive. At the same time, the front piston 118 (Fig. 6B) becomes axially aligned with the proximal end face of the mandrel 47 in the plug 40.

With the plug 40 thus securely held in position and ready for expansion, pressurized fluid is admitted through the fluid line 125b, thereby to cause the telescoping front and rear pistons 118 and 119 to be forcefully extended, as shown in phantom in Fig. 6B, and to react against the thermal shield 9 and the mandrel 47, respectively, whereby the mandrel 47 is driven from its home position (Fig. 4A) to its effective position (Fig. 4C or 5) so as to expand the distal end portion 48 radially into sealing engagement with the wall surface of the cylindrical portion 39 of the flow hole 11. As the mandrel 47 reaches its effective position, and as explained hereinbefore, the snap ring 78 thereon snaps into the groove 67 within the plug body 42, thereby locking the mandrel 47 in its effective position and, at the same time, releasing the indicator pin 86 which consequently "pops out". As it does, its head 97 strikes the valve stem 122 in the front piston 118 and causes it to release air bubbles as a visual indication of the completion of the plugging operation.

Now, the operator can shut off the supply of hydraulic fluid through the line 125b, whereupon the pistons 118 and 119 will be retracted into the ram body 120, thereby allowing the operator to pull the hydraulic ram 112 upwards to its home position (Fig. 7A). Having done so, the operator manipulates the long handle 129 to back the frame 116 away from the installed plug 40 to an extent just sufficient to enable the frame to be pushed down so as as to disengage the flanges 137a, 137b on the inner cradle 135 from the grooves 105a and 105b of the retaining ring 44 of the installed plug 40. The installation tool 100 is now free to be withdrawn from the space between the core barrel 7 and the thermal shield 9, and to be used in a subsequent plugging operation.

## Claims

1. A plug for plugging a flow hole (11) extending through a wall (7) and having a chamfered portion (37) which leads into the wall from one side thereof, and a non-chamfered portion (39) which leads from the chamfered portion to the opposite side of the wall, said plug (40) comprising a plug body (42) which has a proximal end and a distal end and is insertable, distal end first, into the flow hole from said one side of the wall, and said plug body (42) comprising a tubular shell (46) having a radially expandable distal end portion (48), and a tapered mandrel (47) disposed within the shell and slideable therein so as to radially expand said distal end portion (48) upon movement of the mandrel to an effective position thereof adjacent the distal end of the plug body, characterized by a retaining ring (44) for limiting the extent to which said plug body (42) is insertable into the flow hole (11), said retaining ring being sufficiently larger in diameter than the mouth to the chamfered portion (37) of the flow hole (11) to present an annular bearing surface (102) for engagement with a surface portion of said wall (7), and being mounted on a proximal end portion (50) of said shell (46) for sliding movement thereon in a manner and within limits enabling the plug (40) to be telescopically shortened to a minimum length facilitating installation thereof into the flow hole, and telescopically extended to a maximum length assuring proper positioning of said distal end portion (48) for radial expansion thereof within the non-chamfered portion (39) of the flow hole when the plug (40) is fully inserted therein.

2. A plug according to claim 1, characterized in that said minimum length corresponds substantially to the length of said plug body (42).

3. A plug according to claim 1 or 2, charcterized in that said maximum length is predetermined in accordance with the depth of the chamfered portion (37) of the flow hole (11) to be plugged.

4. A plug according to claim 1, 2 or 3, characterized in that said retaining ring (44) and said proximal end portion (50) of the shell (46) include stop means (101 and 62, respectively) cooperating with each other to limit the extent of said telescopic extension.

5. A plug according to claim 4, characterized in that said retaining ring (44) includes additional stop means (107) cooperating with the stop means (62) on said proximal end portion (50) to limit the extent of said telescopic contraction.

6. A plug according to claim 5, characterized in that said retaining ring (44) defines an opening (100) terminating in an annular ledge (101), and said proximal end portion (50) of the shell (46) has thereon a radial flange (62) which is movably disposed within said opening (100) and extend over the annular ledge (101), the latter and said radial flange constituting said stop means for limiting the extent of said telescopic extension.

7. A plug according to claim 6, characterized in that said additional stop means (107) comprises detents (107a,b) formed on said retaining ring (44) and laterally projecting into said opening (100) from peripheral wall portions thereof so as to cooperate with said radial flange (62) in limiting the extent of telescopic contraction of the plug.

8. A plug according to any one of the preceding claims, characterized in that said retaining ring (44) has a coaxial annular flange portion (104) which extends axially therefrom and has said proximal end portion (50) of the shell (46) extending slideably therethrough, said annular flange portion being complementarily tapered with respect to, and diametrically smaller than, the chamfered portion (37) of the flow hole (11) so as to be freely receivable therein.

9. A plug according to any one of the preceding claims, characterized in that said retaining ring (44) has tool-engaging grooves (105) formed in the outer periphery thereof.

10. A plug according to any one of the preceding claims, characterized in that said retaining ring (44) is exchangeable for another retaining ring of substantially like construction but permitting telescopic extension of the plug device (40) to a different maximum length.

11. A plug according to any one of the preceding claims, characterized in that said plug body (42) includes locking means (67, 78) for arresting and locking the mandrel (47) in said effective position thereof when moved thereto.

12. A plug according to claim 11, characterized in that said plug body (42) includes indicating means (82-86) effective, when the mandrel (47) reaches said effective position thereof, to provide an indication to the effect that said distal end portion (48) of the shell (46) has been expanded.

13. A plug according to claim 12, characterized in that said indicating means comprises an indicator pin (86) contained in an axial bore (88) extending into the mandrel (47) from the proximal end thereof, said indicator pin (86) being biased (90) toward an indicating position thereof, and a detaining member (82) which cooperates with said indicator pin (86) in a manner such as to normally detain the indicator pin, against the action of its bias thereon, in a non-indicating position thereof and to release it to the action of said bias when the mandrel (47) reaches its effective position.

14. A plug according to claim 12 or 13, characterized in that said locking means comprises a locking groove (67) formed in the inner wall surface of said shell (46), and a snap ring (78) which is seated in a groove (80) formed in the outer peripheral surface of said mandrel (47), and is adapted to snap into said locking groove (67) when the mandrel reaches said effective position thereof.

15. A plug according to claim 13, characterized in that said detaining member (82) is a holding pin which is slideably disposed in a radial bore (84) extending in the mandrel (47) from the outer periphery thereof to said axial bore (88), and said locking means (67, 78) comprises a locking groove (67) formed in the inner wall surface of said shell (46), and a snap ring (78) which is seated in a groove (80) formed in the outer peripheral surface of the mandrel and communicating with said radial bore (84), said snap ring (78) slidingly engaging the inner wall surface of said shell (46) and being held resiliently depressed thereby so as to maintain said holding pin (82) in holding engagement with said indicator pin (86), and said snap ring (78) being adapted to snap into said locking groove (67) when the mandrel reaches said effective position thereof, thereby to enable the holding pin to release said indicator pin to the action of its bias.

16. A plug according to any one of the preceding claims, characterized in that said shell (46) has at least one sealing rib (54) formed on said distal end portion (48) thereof and adapted to sealingly engage the inner wall surface of said non-chamfered portion (39) of the flow hole (11) when said distal end portion is expanded therein.

17. A plug according to any one of the preceding claims, characterized in that said distal end portion (48) of the shell (46) includes at least one gripping ring (52) which protrudes from its peripheral surface thereof and is adapted to interlockingly indent the inner wall surface of said non-chamfered portion (39) of the flow hole (11) when the distal end portion is expanded therein.

18. A tool for installing the plug of claim 1 in a flow hole (11) extending through said wall (7) and wherein the latter is spaced opposite another wall (9), characterized by-
a) a frame (116) having a front-to-rear dimension enabling it to be lowered into the space between the two walls such that the rear and front of the frame respectively are facing said other wall and the wall with the flow hole to be plugged;
b) a cradle assembly (114) including means (137, 138) engageable with peripheral portions of the retaining ring (44) of the plug (40) so as to hold the latter in an installing disposition, said cradle assembly (114) being supported in said frame (116) for movement of the cradle assembly between a retracted position substantially within the confines of the frame, and a plug insertion position projected forward from the frame; and
c) a hydraulic ram (112) supported in said frame (116) for movement of the ram between an upper position above the cradle assembly (114), and a lower position behind the cradle assembly when in said plug insertion position thereof, said hydraulic ram (112) including means (130) cooperable with the cradle assembly (114) to effect movement thereof to its plug insertion position upon movement of the ram from the upper to the lower position thereof; means (119) for reacting against said other wall (9); and a ram piston (118) arranged to be axially aligned with the mandrel (47) of the plug (40) when held in said cradle assembly (114) in said installing disposition and when the ram (112) is in the lower position thereof, said ram position being hydraulically operable to drive said mandrel to its effective position and thereby radially expand the distal end portion (48) of the plug.

19. A tool according to claim 18, characterized in that said means (119) for reacting against said other wall (9) is an additional hydraulically operable piston adapted to be actuated simultaneously with said ram piston (118).

20. A tool according to claim 18 or 19, and wherein the plug (40) is as defined in claim 13, characterized in that said ram piston (118) includes an air-valve stem (122) operable to release fluid bubbles and adapted to be operated by said indicator pin (86) of the plug when the indicator pin (86) moves to said indicating position thereof.

## Patentansprüche

1. Verschluß zum Verschließen eines Durchflußloches (11), das durch eine Wand (7) hindurchführt und einen abgeschrägten Teil (37), der in die Wand von deren einen Seite hineinführt, und einen nicht abgeschrägten Teil (39) besitzt, der von dem abgeschrägten Teil zu der gegenüberliegenden Seite der Wand führt, wobei der Verschluß (40) aus einem Verschlußkörper (42) besteht, der ein vorderes Ende und ein hinteres Ende hat, und mit dem hinteren Ende zuerst in das Durchflußloch von der einen Seite der Wand aus eingesetzt wird, und wobei der Verschlußkörper (42) weiterhin aus einer röhrenförmigen Hülse (46), die am hinteren Ende einen radial ausdehnbaren Teil (48) hat, und aus einem spitz zulaufenden Stopfen (47) besteht, der in der Hülse untergebracht ist und in ihr gleiten kann, so daß der hintere Hülsenteil (48) durch eine Bewegung des Stopfens in eine wirksame Position, die an das hintere Ende des Verschlußkörpers angrenzt, radial ausdehnbal ist, gekennzeichnet durch einen Außenring (44), der das Maß begrenzt, bis zu welchem der Verschlußkörper (42) in das Durchflußloch (11) eingeführt werden kann, wobei der Außenring im Durchmesser hinreichend größer ist als die Öffnung des abgeschrägten Teils (37) des Durchflußloches (11), um eine ringförmige Auflagefläche (102) zu bilden, die mit einem Oberflächenteil der Wand (7) im Eingriff steht, und er auf das vordere Ende (50) der Hülse (46) montiert ist, um sich darauf in einer Art und Weise und in Grenzen gleitend zu bewegen, die es dem Verschluß (40) ermöglichen, teleskopartig auf eine Mindestlänge verkürzt zu werden, die den Einbau in das Durchflußloch erleichtert, und teleskopartig auf eine Maximallänge verlängert zu werden, die eine geeignete Stellung des hinteren Endes (48) sicherstellt, damit dieses sich in dem nicht abgeschrägten Teil (39) des Durchflußloches radial ausdehnen kann, wenn der Verschluß (40) vollständig in dieses eingesetzt ist.

2. Verschluß nach Anspruch 1, dadurch gekennzeichnet, daß die Mindestlänge im wesentlichen der Länge des Verschlußkörpers (42) entspricht.

3. Verschluß nach Anspruch 1 oder 2, dadurch gekennzeichnet, daß die Maximallänge in Übereinstimmung mit der Tiefe des abgeschrägten Teils (37) des zu verschließenden Durchflußloches (11) vorbestimmt ist.

4. Verschluß nach Anspruch 1, 2 oder 3, dadurch gekennzeichnet, daß der Außenring (44) und das vordere Ende (50) der Hülse (46) je einen Anschlag (101 bzw. 62) haben, die zusammenwirken, um den Umfang der teleskopartigen Verlängerung zu begrenzen.

5. Verschluß nach Anspruch 4, dadurch gekennzeichnet, daß der Außenring (44) zusätzliche Anschläge (107) enthält, die mit dem Anschlag (62) am vorderen Ende (50) zusammenwirken, um den Umfang der teleskopartigen Verkürzung zu begrenzen.

6. Verschluß nach Anspruch 5, dadurch gekennzeichnet, daß der Außenring (44) eine Aussparung (100) besitzt, die in einem ringförmigen Absatz (101) endet, und daß das vordere Ende (50) der Hülse (46) einen Flansch (62) besitzt, der in der Aussparung (100) beweglich angeordnet ist und über den ringförmigen Absatz (101) ragt, wobei dieser und der Flansch die Anschläge bilden, um den Bereich der teleskopartigen Verlängerung zu begrenzen.

7. Verschluß nach Anspruch 6, dadurch gekennzeichnet, daß die zusätzlichen Anschläge (107) Arretierungen (107a,b) enthalten, die auf dem Außenring (44) ausgebildet sind und die von der Außenwand seitlich in die Aussparung (100) hineinragen, um mit dem Flansch (62) zur Begrenzung des Umfangs der teleskopartigen Verkürzung zusammenzuwirken.

8. Verschluß nach mindestens einem der vorhergehenden Ansprüche, dadurch gekennzeichnet, daß der Außenring (44) einen konzentrischen, ringförmigen Flanschteil (104) hat, der sich an diesem axial fortsetzt, und daß das vordere Ende (50) der Hülse (46) gleitend durch diesen hindurchragt, wobei sich der ringförmige Flanschteil hinsichtlich des abgeschrägten Teils (37) des Durchflußloches verjüngt und im Durchmesser kleiner ist als dieses, um darin frei aufgenommen zu werden.

9. Verschluß nach mindestens einem der vorhergehenden Ansprüche, dadurch gekennzeichnet, daß der Außenring (44) Nuten (105) enthält, die in dessen äußeren Rand eingearbeitet sind und in welche Werkzeuge eingreifen können.

10. Verschluß nach mindestens einem der vorhergehenden Ansprüche, dadurch gekennzeichnet, daß sich der Außenring (44) gegen einen anderen Außenring von einer im wesentlichen gleichen Konstruktion auswechseln läßt, die aber eine teleskopartige Verlängerung des erfindungsgemäßen Verschlußes (40) mit einer unterschiedlichen maximalen Länge erlaubt.

11. Verschluß nach mindestens einem der vorhergehenden Ansprüche, dadurch gekennzeichnet, daß der Verschlußkörper (42) Arretierungen (67, 78) enthält, um den Stopfen (47) in dessen wirksamer Position aufzuhalten und zu blockieren, wenn er sich dorthin bewegt hat.

12. Verschluß nach Anspruch 11, dadurch gekennzeichnet, daß der Verschlußkörper (42) Anzeigemittel (82-86) enthält, die dann wirksam sind, wenn der Stopfen (47) seine wirksame Position erreicht hat, und eine Anzeige dafür liefern, daß sich das hintere Ende (48) der Hülse (46) ausgedehnt hat.

13. Verschluß nach Anspruch 12, dadurch gekennzeichnet, daß die Anzeigemittel aus einem Anzeigezapfen (86), der in einer axialen Bohrung (88) gefaßt ist, die in den Stopfen (47) von dessen vorderem Ende hineinführt, wobei dieser Anzeigezapfen (86) gegen eine Anzeigeposltion (90) vorgespannt ist, und einem Sperrkörper (82) bestehen, der mit dem Anzeigezapfen (86) in einer Art und Weise zusammenwirkt, daß der Anzeigezapfen normalerweise gegen die Wirkung seiner Vorspannung in einer nicht anzeigenden Position gesperrt und für die Wirkung der Vorspannung freigegeben wird, wenn der Stopfen (47) seine wirksame Position erreicht hat.

14. Verschluß nach Anspruch 12 oder 13, dadurch gekennzeichnet, daß die Arretierungen eine Arretiernut (67), die in die Oberfläche der Innenseite der Hülse (46) eingearbeitet ist, und einen Sprengring (78) enthalten, der in einer Nut (80) gefaßt ist, die in die Oberfläche der Außenseite des Stopfens (47) eingearbeitet und so angepaßt ist, daß er in die Arretiernut (67) einrasten kann, wenn der Stopfen seine wirksame Position erreicht hat.

15. Verschluß nach Anspruch 13, dadurch gekennzeichnet, daß der Sperrkörper (82) ein Sperrstift ist, der gleitend in einer Radialbohrung (84) angeordnet ist, die in dem Stopfen (47) von dessen Außenseite zu der Axialbohrung (88) führt, und daß die Arretierungen (67, 78) eine Arretiernut (67), die in der Oberfläche der Innenseite der Hülse (46) eingearbeitet ist, und einen Sprengring (78) enthalten, der in einer Nut (80) gefaßt ist, die in die Oberfläche der Außenseite des Stopfens eingearbeitet ist und mit der Radialbohrung (84) in Verbindung steht, und daß der Sprengring (78) die Oberfläche der Innenseite der Hülse (46) zum Gleiten benutzt und dadurch elastisch zusammengedrückt gehalten wird, um das Ineinandergreifen des Sperrstiftes (82) mit dem Anzeigestift (86) zu gewährleisten, und daß der Sprengring (78) so angepaßt ist, daß er in die Arretiernut (67) einrasten kann, wenn der Stopfen seine wirksame Position erreicht hat und es dadurch ermöglicht, daß der Sperrstift den Anzeigestift auslöst.

16. Verschluß nach mindestens einem der vorhergehenden Ansprüche, dadurch gekennzeichnet, daß die Hülse (46) wenigstens eine Dichtrippe (54) hat, die in das hintere Ende (48) eingearbeitet und so angepaßt ist, daß sie die Oberfläche der Innenseite des nicht abgeschrägten Teils (39) des Durchflußloches (11) abdichtend berührt, wenn sich das hintere Ende darin ausgedehnt hat.

17. Verschluß nach mindestens einem der vorhergehenden Ansprüche, dadurch gekennzeichnet, daß das hintere Ende (48) der Hülse (46) wenigstens einen Klemmring (52) enthält, der aus deren äußeren Oberfläche herausragt und so angepaßt ist, daß er verriegelnd in die Oberfläche der Innenseite des nicht abgeschrägten Teiles (39) des Durchflußloches (11) einschneidet, wenn sich das hintere Ende darin ausgedehnt hat.

18. Vorrichtung zum Einbau des Verschlusses aus Anspruch 1 in ein Durchflußloch (11), das durch die Wand (7) führt, die sich gegenüber einer anderen Wand (9) befindet, gekennzeichnet durch
a) einen Rahmen (116) mit einer Abmessung von der Vorderzur Rückseite, die es ermöglicht, daß er in den Raum zwischen den beiden Wänden hinabgelassen werden kann, derart, daß die Hinterseite des Rahmens der anderen Wand und die Vorderseite des Rahmens der Wand mit dem zu verschließenden Loch gegenüberliegen;
b) einen Schlitten (114), der Elemente (137, 138) enthält, die in die äußeren Teile des Außenringes (44) des Verschlusses (40) eingreifen können, um letzteren in einer Einbaustellung zu halten, wobei der Schlitten (114) in dem Rahmen (116) so gelagert ist, daß sich der Schlitten zwischen einer eingezogenen Stellung, im wesentlichen innerhalb der Abmessungen des Rahmens, und einer Stellung zum Einführen des Verschlusses, die vor den Rahmen vorspringt, bewegen kann;
c) eine Hydraulikramme (112), die in dem Rahmen (116) so gelagert ist, daß sich die Ramme zwischen einer oberen Position über dem Schlitten (114) und einer unteren Position hinter dem Schlitten, wenn er in der Stellung zur Einführung des Verschlußes ist, bewegen kann, wobei die Hydraulikramme (112) Elemente (130) enthält, die mit dem Schlitten (114) zusammenwirken, um dessen Bewegung zu der Stellung zur Einführung des Verschlusses durch eine Bewegung der Ramme von deren oberer zu deren unterer Position zu bewirken, sowie ein Element (119), das gegen die andere Wand (9) wirkt, und einen Rammkolben (118), der so angeordnet ist, daß er mit dem Stopfen (47) des Verschlusses (40) axial ausgerichtet ist, wenn dieser in dem Schlitten (114) in der Einbauposition gehalten wird, und wenn die Ramme (112) in ihrer unteren Position ist und der Rammkolben hydraulisch betätigt wird, um den Stopfen in seine wirksame Position zu treiben und dabei das hintere Ende (48) des Verschlußes auszudehnen.

19. Gerät nach Anspruch 18, dadurch gekennzeichnet, daß das Element (119), das gegen die andere Wand (9) wirkt, ein zusätzlicher, hydraulisch betätigter Kolben ist, der so angepaßt ist, daß er gleichzeitig mit dem Rammkolben (118) betätigt wird.

20. Vorrichtung nach Anspruch 18 oder 19, mit einem Verschluß wie in Anspruch 13 definiert, dadurch gekennzeichnet, daß der Rammkolben (118) einen Luft-Ventilstößel (122) enthält, bei dessen Betätigung Blasen freigesetzt werden, und der so angepaßt ist, daß er durch den Anzeigestift (86) des Verschlusses betätigt wird, wenn der Anzeigestift (86) sich zu der Anzeigeposition bewegt hat.

## Revendications

1. Un bouchon pour fermer un orifice de circulation (11) traversant une paroi (7) et comportant une partie chanfreinée (37) qui conduit dans la paroi depuis un côté de celle-ci, et une partie non-chanfreinée (39) qui conduit de la partie chanfreinée jusqu'au côté opposé de la paroi, ledit bouchon (40) consistant en un corps de bouchon (42) qui a une extrémité proximale et une extrémité distale et qui peut être introduit, l'extrémité distale en premier, dans l'orifice de circulation depuis ledit premier côté de la paroi, et ledit corps de bouchon (42) consistant en une coquille tubulaire (46) ayant une partie (48) formant extrémité distale expansible, et un mandrin (47) conique placé à l'intérieur de la coquille, dans laquelle il peut glisser, pour agrandir radialement ladite partie (48) formant extrémité distale suite au mouvement du mandrin jusqu'à une position efficace de celui-ci à proximité de l'extrémité distale du corps de bouchon, caractérisé par une bague de retenue (44) pour limiter la capacité d'insertion dudit corps de bouchon (42) dans l'orifice d'écoulement (11), ladite bague de retenue ayant un diamètre suffisamment plus grand que l'embouchure de la partie chanfreinée (37) de l'orifice de circulation (11) pour fournir une surface d'appui annulaire (102) qui vient au contact avec une partie de la surface de ladite paroi (7), et étant placée sur une partie (50) formant extrémité proximale de ladite coquille (46), en vue d'un mouvement par glissement sur celle-ci d'une façon, et dans des limites, qui permettent de raccourcir télescopiquement le bouchon (40) jusqu'à une longueur minimale facilitant l'installation de celui-ci dans l'orifice de circulation, et qui permette de l'agrandir télescopiquement jusqu'à une longueur maximale qui assure le positionnement correct de ladite partie (48) formant extrémité distale pour une extension radiale de celle-ci à l'intérieur de la partie (39) non-chanfreinée de l'orifice de circulation lorsque le bouchon (40) y est entièrement inséré.

2. Un bouchon suivant la revendication 1, caractérisé en ce que ladite longueur minimale correspond sensiblement à la longueur dudit corps de bouchon (42).

3. Un bouchon suivant la revendication 1 ou 2, caractérisé en ce que ladite longueur maximale est prédéterminée en fonction de la profondeur de la partie chanfreinée (37) de l'orifice de circulation (11) que l'on veut boucher.

4. Un bouchon suivant la revendication 1, 2 ou 3, caractérisé en ce que ladite bague de retenue (44) et ladite partie (50) formant extrémité proximale de la coquille (46) comporte des moyens d'arrêt (respectivement 101 et 62) coopérant les uns avec les autres pour limiter la valeur de ladite extension télescopique.

5. Un bouchon suivant la revendication 4, caractérisé en ce que ladite bague de retenue (44) comporte un moyen d'arrêt (107) additionnel coopérant avec le moyen d'arrêt (62) sur ladite partie (50) formant extrémité proximale pour limiter la valeur de ladite contraction télescopique.

6. Un bouchon suivant la revendication 5, caractérisé en ce que ladite bague de retenue (44) délimite une ouverture (100) se terminant par un épaulement annulaire (101), et ladite partie (50) formant extrémité proximale de la coquille (46) comporte un rebord radial (62) placé de façon amovible à l'intérieur de ladite ouverture (100) et recouvrant l'épaulement annulaire (101), ce dernier et ledit rebord radial constituant ledit moyen d'arrêt qui limite la valeur de ladite extension télescopique.

7. Un bouchon suivant la revendication 6, caractérisé en ce que ledit moyen d'arrêt additionnel (107) consiste en des saillies (107a, b) formées sur ladite bague de retenue (44) et se projetant latéralement depuis les parties périphériques de la paroi de celle-ci dans ladite ouverture (100) de façon à coopérer avec ledit rebord radial (62) pour limiter la valeur de la contraction télescopique du bouchon.

8. Un bouchon suivant l'une quelconque des précédentes revendications, caractérisé en ce que ladite bague de retenue (44) comporte une partie (104) formant rebord annulaire co-axial qui s'étend suivant l'axe de la bague, et qui est traversée de façon coulissante par ladite partie (50) formant extrémité proximale de la coquille (46), ladite partie formant rebord annulaire étant conique de façon complémentaire à la partie chanfreinée (37) de l'orifice d'écoulement (11), et ayant un diamètre plus petit que celle-ci, de façon à y être introduite librement.

9. Un bouchon suivant l'une quelconque des précédentes revendications, caractérisé en ce que ladite bague de retenue (44) comporte des rainures (105) pour mise en prise d'outil formées sur sa partie périphérique externe.

10. Un bouchon suivant l'une quelconque des précédentes revendications, caractérisé en ce que ladite bague de retenue (44) est interchangeable avec une autre bague de retenue de construction sensiblement similaire mais permettant une extension télescopique du dispositif de bouchon (40) jusqu'à une longueur maximale différente.

11. Un bouchon suivant l'une quelconque des précédentes revendications, caractérisé en ce que ledit corps de bouchon (42) comporte des moyens de verrouillage (67, 78) pour arrêter et verrouiller le mandrin (47) dans ladite position efficace de celui-ci lorsqu'il est déplacé jusqu'à elle.

12. Un bouchon suivant la revendication 11, caractérisé en ce que ledit corps de bouchon (42) comporte des moyens d'indication (82-86) efficaces, lorsque le mandrin (47) atteint ladite position efficace de celui-ci, pour fournir une indication du fait que ladite partie (48) formant extrémité distale de la coquille (46) a été agrandie.

13. Un bouchon suivant la revendication 12, caractérisé en ce que ledit moyen d'indication consiste en une tige indicatrice (86) contenue dans un alésage axial (88) qui s'étend dans le mandrin (47) depuis l'extrémité proximale de celui-ci, ladite tige indicatrice (86) étant sollicitée (90) vers une position de repérage de celui-ci, et un élément de retenue (82) qui coopère avec ladite tige indicatrice (86) de façon à normalement retenir la tige indicatrice à l'encontre de la force de sollicitation sur celle-ci dans une position de non-indication de celle-ci, et de façon à l'abandonner à l'action dudit ressort lorsque le mandrin (47) atteint sa position efficace.

14. Un bouchon suivant la revendication 12 ou 13, caractérisé en ce que ledit moyen de verrouillage consiste en une rainure de verrouillage (67) formée dans la surface de la paroi interne de ladite coquille (46) et en une bague à ressort (78) qui est logée dans une rainure (80) formée dans la surface périphérique externe dudit mandrin (47), bague qui va s'engager brusquement dans ladite rainure de verrouillage (67) lorsque le mandrin atteint sa dite position efficace.

15. Un bouchon suivant la revendication 13, caractérisé en ce que ledit moyen de retenue (82) est une tige de retenue placée de façon glissante dans un alésage radial (84) qui s'étend dans le mandrin (47) depuis sa périphérie externe jusqu'audit alésage axial (88), et lesdits moyens de verrouillage (67, 78) consistent en une rainure de verrouillage (67) formée dans la surface de la paroi interne de ladite coquille (46) et en une bague à ressort (78) logée dans une rainure (80) formée dans la surface périphérique externe du mandrin et communiquant avec ledit alésage radial (84), ladite bague à ressort (78) étant en contact glissant avec la surface de la paroi interne de ladite coquille (46) et étant ainsi maintenue comprimée élastiquement de façon à maintenir ladite tige de retenue (82) accrochée avec ladite tige d'indication (86), et ladite bague à ressort (78) pouvant s'engager brusquement dans ladite rainure de verrouillage (67) quand le mandrin atteint sa dite position efficace, permettant ainsi à la tige de retenue d'abandonner ladite tige indicatrice à l'action de son ressort.

16. Un bouchon suivant l'une quelconque des précédentes revendications, caractérisé en ce que ladite coquille (46) comporte au moins une nervure d'étanchéité (54) formée sur sa partie (48) formant extrémité distale et propre à venir en contact étanche avec la surface de la paroi interne de ladite partie non-chanfreinée (39) de l'orifice de circulation (11) lorsque ladite partie formant extrémité distale y est agrandie.

17. Un bouchon suivant l'une quelconque des précédentes revendications, caractérisé en ce que ladite partie (48) formant extrémité distale de la coquille (46) comporte au moins une bague de saisie (52) qui fait saillie de sa surface périphérique et qui est propre à mordre dans, et à s'interverrouiller avec, la surface de la paroi interne de ladite partie non-chanfreinée (39) de l'orifice de circulation (11) quand la partie formant extrémité distale y est agrandie.

18. Un outil pour installer le bouchon de la revendication 1 dans un orifice de circulation (11) traversant ladite paroi (7), et dans lequel cette dernière est placée en vis-à-vis d'une autre paroi (9), caractérisé par :
a) un châssis (116) dont la dimension avant-arrière permet de l'abaisser dans l'espace compris entre les deux parois, de telle sorte que l'avant et l'arrière du châssis soient situés respectivement face à ladite autre paroi et face à la paroi avec le trou de circulation que l'on veut boucher,
b) un ensemble formant berceau (114) comportant des moyens (137, 138) pouvant se mettre en prise avec les parties périphériques de la bague de retenue (44) du bouchon (40) de façon à maintenir celui-ci en position d'installation, ledit ensemble formant berceau (114) étant maintenu sur ledit châssis (116) de façon à pouvoir se déplacer entre une position rétractée sensiblement à l'intérieur des limites du châssis et une position d'insertion du bouchon correspondant à une projection vers l'avant du châssis, et
c) un vérin hydraulique (112) maintenu dans ledit châssis, pour se déplacer entre une position supérieure au-dessus de l'ensemble formant berceau (114), et une position inférieure à l'arrière de l'ensemble formant berceau quand celui-ci est dans ladite position d'insertion du bouchon, ledit vérin hydraulique (112) comportant un moyen (130) qui peut agir avec l'ensemble formant berceau (114) pour assurer le mouvement de celui-ci jusqu'à sa position d'insertion du bouchon suite au mouvement du vérin depuis sa position supérieure jusqu'à sa position inférieure; un moyen (119) pour réagir contre ladite autre paroi (9); et un piston de vérin (118) placé pour être axialement aligné avec le mandrin (47) du bouchon (40) quand il est maintenu dans ledit ensemble formant berceau (114) dans ladite disposition d'installation et quand le vérin (112) se trouve dans sa position inférieure, ledit piston de vérin fonctionnant hydrauliquement pour entraîner ledit mandrin vers sa position efficace et ainsi agrandir radialement la partie (48) formant extrémité distale du bouchon.

19. Un outil suivant la revendication 18, caractérisé en ce que ledit moyen (119) pour réagir contre ladite autre paroi (9) est un piston additionnel qui fonctionne hydrauliquement, propre à être actionné en même temps que ledit piston de vérin (118).

20. Un outil suivant la revendication 18 ou 19, et dans lequel le bouchon (40) est tel que défini dans la revendication 13, caractérisé en ce que ledit piston de vérin (118) comporte une tige-valve à air (122) pouvant relâcher des bulles de fluide et capable d'être actionnée par ladite tige indicatrice (86) du bouchon quand la tige indicatrice (86) se déplace vers sa position d'indication.
